# EUROPÄISCHE PATENTSCHRIFT

(11) **EP 0 500 555 B1**
(45) Veröffentlichungstag und Bekanntmachung des Hinweises auf die Patenterteilung: **12.01.1994**
(21) Anmeldenummer: 90914895.9
(22) Anmeldetag: 22.10.1990
(51) Int. Cl.: A61C 5/10, A61C 13/00, B23H 3/04

(54) **VERFAHREN ZUR HERSTELLUNG VON ZAHNERSATZTEILEN MITTELS FUNKENEROSION UND VORRICHTUNG ZUM EINSPANNEN, EINLEGEN UND AUSRICHTEN VON GIPSMODELLEN ODER KUPFERELEKTRODEN FÜR DIE FUNKENEROSIVE HERSTELLUNG VON ZAHNERSATZTEILEN**
PROCESS FOR MANUFACTURING TOOTH REPLACEMENTS BY SPARK EROSION AND DEVICE FOR CLAMPING, INSERTING AND TRUING PLASTER MODELS OR COPPER ELECTRODES FOR THE SPARK-EROSION MANUFACTURE OF TOOTH REPLACEMENTS
PROCEDE DE FABRICATION DE PROTHESES DENTAIRES PAR ETINCELAGE ET DISPOSITIF POUR LA TENSION, LA POSE ET L'AJUSTAGE DE MODELES EN PLATRE OU D'ELECTRODES EN CUIVRE POUR LA FABRICATION DE PROTHESES DENTAIRES PAR ETINCELAGE

(30) Priorität: 24.10.1989 DE 3935275
(43) Veröffentlichungstag der Anmeldung: 02.09.1992
(73) Patentinhaber: Krupp Medizintechnik GmbH, 45021 Essen (DE)
(72) Erfinder: KÜHN, Walter, Horst, D-7213 Dunningen 1 (DE)
(74) Vertreter: Vomberg, Friedhelm, Dipl.-Phys.
(86) Internationale Anmeldenummer: DE9000798
(87) Internationale Veröffentlichungsnummer: WO9106256

(56) Entgegenhaltungen:
- EP-A- 0 064 601
- EP-A- 0 225 513
- EP-A- 0 312 699
- WO-A-88/06429
- DE-A- 3 320 902
- Dtsch Zahnärztl Z, vol. 41 1986 E. Körber, W. Lindemann und W. Pielsticker : "Herstellung einer Metallhülsenkrone aus Vollmaterial mit Hilfe der Funkenerosion", siehe Seite 525 - Seite 526

## Beschreibung

### Verfahren zur Herstellung von Zahnersatzteilen mittels Funkenerosion und Vorrichtung zum Einspannen, Einlegen und Ausrichten von Gipsmodellen oder Kupferelektroden für die funkenerosive Herstellung von Zahnersatzteilen

Die Erfindung betrifft ein Verfahren zur Herstellung von Zahnersatzteilen, wie Kronen oder Brücken nach dem Oberbegriff des Anspruchs 1

Ein solches Verfahren wird beispielsweise in der EP-A-0 225 513 beschrieben.

Die Erfindung betrifft ferner eine Vorrichtung zum Einspannen, Einlegen und Ausrichten von Gipsmodellen oder Kupferelektrodenfür die funkenerosive Herstellung von Zahnersatzteilen, bestehend aus einem in jede gewünschte Neigung einstellbaren Ablagetisch.

Bereits in der Deutschen Zahnärztlichen Zeitschrift, 41, Seiten 525 bis 526 (1986), wird die Herstellung einer Metallhülsenkrone aus Vollmaterial mit Hilfe der Funkenerosion beschrieben. Hierbei wird eine individuell auf einem Modell oder im Munde des Patienten modellierte Wachsform oberhalb und unterhalb eines in einer Ebene angenommenen Kronenäquators auf galvanischem Weg mit einer etwa 1 mm starken Kupferschicht beschichtet. Diese Galvanoplastik ist am Äquator trennbar, so daß man zwei Formelektroden erhält, mit denen aus einem Metallrohling funkenerosiv ein Zahnersatzteil gefertigt wird. Beide Formelektroden dringen entsprechend dem erosiven Abtrag in den Metallkörper ein und bilden hierdurch das Zahnersatzteil, z.B. eine Mantelkrone. Der Vorteil dieses Verfahrens liegt darin, daß herkömmliche Edelmetall- und Nichtedelmetall-Legierungen verarbeitet werden können, insbesondere auch solche, die sich nicht bzw. nur unter schwierigen Bedingungen vergießen lassen. Bei der Zahnersatzteilherstellung werden Fehler, die von Form-, Dimensions- und Gefügeveränderungen während des Gusses herrühren, weitgehend ausgeschlossen. Nachteilig bei diesem Verfahren ist jedoch, daß der natürliche Zahn bzw. entsprechend geformte Wachsmodelle keine eindeutig definierbare Äquatorebene besitzen, da der Zahnäquator sowohl in vertikaler wie auch in horizontaler Richtung wellenförmig verläuft. Nimmt man eine mittlere Schnittebene an, so werden gleichzeitig Hinterschnitte in Kauf genommen, die mittels Funkenerosion nicht bearbeitbar sind.

Darüber hinaus wird in der DE 37 35 558 C2 vorgeschlagen, die positiven Wachsmodelle auf einem gemeinsamen Träger anzuordnen, und zwar derart, daß Gußformen herstellbar und ausformbar sind. Die einzelnen Ersatzteile sollen in einer gemeinsamen Äquatorebene ausgerichtet werden, und zwar in ihrer breitesten horizontalen Schnittebene, wobei diese Äquatorebene die Trennebene für die späteren Erodierelektroden ist. In einem weiteren Verfahrensschritt werden die Zwischenräume zwischen den einzelnen Ersatzteilen bis zu dieser angenommenen Äquatorebene aufgefüllt, um zunächst die obere Elektrode herzustellen, wobei mit dem Auffüllen der Zwischenräume zwischen den einzelnen Zahnersatz-Wachsmodellen eine oder mehrere Orientierungsstifte senkrecht zur Äquatorebene angeordnet werden. Nach dem Aushärten der Gießmasse, z.B. einer Silikonmischung, wie die Oberfläche von Verunreinigungen befreit, das gereinigte Modell mit einer dünnen Silberschicht überzogen, die als Leitschicht der späteren Erodierelektrode dient. Nach galvanischem Kupferauftrag wird dieser durch einen Hinterbau stabilisiert und kann als Erosionselektrode eingesetzt werden. Zur Herstellung der zweiten Elektrode wird das erste Modell um 180° gedreht, in eine Form eingegeben, die im Bodenbereich mit einer aushärtenden Trägermasse aufgefüllt ist. Nach Aushärtung der Trägermasse wird ebenfalls eine Silberschicht an der Oberfläche aufgetragen und diese mit Kupfer überzogen. Hierbei ist nachteilig, daß eine willkürliche Äquatorebene, wie oben dargelegt, angenommen wird, ferner müssen die einzelnen Wachsmodelle in einer Gießform ausgerichtet werden, was zum Teil nur durch Unterlegen von Distanzstücken, die zusätzlich zu fertigen sind, geschieht. Eine Zeitersparnis bei der Funkenerosion, wie gewünscht, ist deshalb nicht zu erreichen, da pro Zeiteinheit nur eine vorgegebene Anzahl von Erosionsfunken - je nach angelegten Spannung - erzeugt werden kann.

Insgesamt haben die zuvor beschriebenen Verfahren weiterhin den Nachteil, daß die Wachsmodelle sowohl beim Abziehen vom Gipsmodell als auch bei der Vorbereitung bzw. Herstellung der Kupferelektroden ungeschützt sind und die Gefahr einer Verformung in Kauf genommen werden muß. Über die exakte Ausrichtung der Wachsmodelle bzw. der Kupferelektroden zueinander gibt der Stand der Technik nichts her.

Es ist daher Aufgabe der vorliegenden Erfindung, das eingangs genannte Verfahren derart weiterzubilden, daß unabhängig vom manuellen Geschick der Bearbeitungsperson sichergestellt ist, daß das Wachsmodell während der verschiendenen Bearbeitungsstufen unbeschädigt bleibt und ferner, daß Maßnahmen angegeben werden, wie eine exakte Ausrichtung des Gipsmodells sowie der Kupferelektroden zueinander gewährleistet werden kann. Ferner ist es Aufgabe der vorliegenden Erfindung, zur Durchführung dieser Ausrichtung eine geeignete Vorrichtung anzugeben.

Bei dem eingangs genannten Verfahren wird die Aufgabe dadurch gelöst, daß auf den entfetteten, imprägnierten Stumpf des Gipsmodells eine gleitfähige, stabile, möglichst inelastische, dünnwandige Kunststoffhaube aufgetragen wird, die kurz oberhalb der Präparationsgrenze endet und über der anschließend das Wachsmodell unter Ausformung einer Präparationsgrenze und gleichzeitiger Festlegung des Zahnäquators geformt wird, bevor hierauf eine bis zum Zahnäquator reichende Silikonschicht okklusal aufgetragen wird, wobei das Gipsmodell als Meistermodell mit eingesetztem Wachsteil in einer Justiervorrichtung eingespannt und ausgerichtet ist, daß ferner auf die Silikonschicht ein aushärtbarer Kunststoff aufgetragen wird, auf den eine horizontal ausgerichtete, im Umfang größere Orientierungsplatte abgesenkt wird, so daß diese Orientierungsplatte nach Aushärtung des Kunststoffes mit dem Kunststoff verbunden ist, daß diese Orientierungsplatte mit samt der anhaftenden Schichten von dem Gipsstumpf abgehoben wird und von der apikalen Seiten her von dem Zahnäquator aus der zuletzt aufgetragene Kunststoff sowie die hieran angrenzende Fläche der Orientierungsplatte verspachtelt werden und auf die apikale Seite der ersten Kunststoffhaube, der freiliegenden Wachsmodellflächen und angrenzenden Bereiche bis zur Orientierungsplatte das elektrisch leitfähige Material und darauf auf galvanischem Weg ein Kupferüberzug aufgetragen werden. Danach wird der Kupferauftrag zusammen mit dem Wachsmodell herausgelöst und von der okklusalen Seite her bis zum Zahnäquator werden ebenfalls zunächst ein leitfähiges Material und darauf auf galvanischem Weg ein Kupferüberzug aufgetragen. Auf beiden Seiten des Kupferüberzuges wird an den Außenflächen jeweils ein Dorn oder ein anderes geeignetes Befestigungsmittel angebracht, wobei die Dorne zueinander in axialer und radialer Richtung ausgerichtet sind.

Die vorherigen Entfettung und Imprägnierung des Stumpfes sowie die Auftragung der dünnwandigen Kunststoffhaube dienen zum Schutz des Wachsmodells von der Innenseite her, wodurch insbesondere beim Abziehen des Wachsmodells vom Gipsmodell keine Verformung des Wachsmodells eintreten kann.

Der Zahnäquator des modellierten Wachsmodells wird exakt ermittelt und dessen tatsächlicher Verlauf bei dem Auftrag der Silikonschicht berücksichtigt. Um zu verhindern, daß das Wachsmodell vom Meistermodell (Gipsmodell) per Hand abgezogen werden muß, wird ferner auf die Silikonschicht ein aushärtbarer Kunststoff aufgetragen, auf den eine horizontal ausgerichtete im Umfang größere Orientierungsplatte abgesenkt wird, so daß diese Orientierungsplatte nach Aushärtung des Kunststoffes mit dem Kunststoff verbunden ist. Hebt man diese Orientierungsplatte mit samt der anhaftenden Schichten von dem Gipsstumpf ab, so kann dies über eine Krafteinwirkung auf die Orientierungsplatte geschehen, womit verhindert wird, daß von der Seite oder von oben her Druckkräfte beim Anfassen auf die Wachsmodellation einwirken. Das Verspachteln der zuletzt aufgetragenen Kunststoffschicht dient zur Glättung und vor allen Dingen zum Auffüllen etwa noch vorhandener Hinterschnitte, die nach galvanischem Kupferüberzug ein Abziehen der fertiggestellten Kupferelektrode verhindern würden. Darüber hinaus wird der Kunststoff im Hinblick auf die danach aufzutragende Silber- oder Graphitschicht ausgewählt. Der Kupferauftrag, der später als Funkenerosionselektrode eingesetzt wird, stellt eine exakte Negativkontur des Gipsstumpfes sowie des apikalen Teils der Wachsmodellation dar.

Nachdem dieser Kupferauftrag zusammenmit dem Wachsmodell von der Silikonschicht abgelöst worden ist, wird auf der freigelegten okklusalen Seite her bis zum Zahnäquator gleichfalls eine Silber- oder Graphitschicht aufgetragen, worauf eine Kupferschicht auf galvanischem Weg hergestellt wird. Hierbei kann die untere apikale Kupferelektrode zusammen mit der okklusalen Kupferelektrode galvanisiert werden.

Um die Kupferelektroden in eine Funkenerosionsmaschine einspannen zu können, müssen sie jeweils an ihrer Rückseite noch mit Befestigungsmitteln, entweder Platten, Dornen oder Führungshülsen versehen werden. Hierbei ist es wichtig, daß das Befestigungsmittel sowohl in axialer (horizontaler und vertikaler Richtung) als auch in radialer Richtung ausgerichtet werden. Dies bedeutet, daß bei ineinandergesetzten Kupferelektroden die Längsachsen der Dorne bzw. Befestigungsmittel auf einer Linie liegen müssen und auch gewährleistet sein muß, daß beim späteren funkenerosiven Abtrag die zweite Elektrode nicht gegenüber der ersten in radialer Richtung verdreht ist. Es ist daher empfehlenswert, als Befestigungsmittel solche Teile zu verwenden, die nicht rotationssymmetrisch sind, also z.B. im Querschnitt halbkreisförmige Dorne oder nicht runde Platten.

Weiterbildungen des Verfahrens sind in den Ansprüchen 2 bis 14 beschrieben.

So hat sich als Material für die Kunststoffhaube ein Kaltpolymerisat auf Acrylatbasis als besonders geeignet herausgestellt. Die Kunststoffhaube sollte vorzugsweise ca. 1/10 mm oberhalb der Präparationsgrenze enden, um im Bereich der Präparationsgrenze eine saubere Wachsmodellation zu ermöglichen.

Die Orientierungsplatte besteht aus Kostengründen aus Metall und weist mindestens zwei Bohrungen auf, worüber diese Platte justierbar ist.

Um das Wachsmodell beim Abheben von dem Gipsstumpf (Meistermodell) vor Beschädigungen zu schützen, wie sie etwa durch Verkanten oder Verdrehen bei Abnahme von Hand auftreten, wird die Orientierungsplatte magnetisch an einem horizontalen Auslegerarm einer Justiervorrichtung sowohl während des Absenkens als auch während des Abziehens vom Meistermodell gehalten. Hierdurch wird eine exakte vertikale Führung in Einschubrichtung gewährleistet.

Will man den funkenerosiven Abtrag zunächst mit einer Schruppelektrode und die Feinbearbeitung mit einer Schlichtelektrode durchführen, empfiehlt sich folgende Herstellung der Schruppelektrode. Zunächst wird, wie oben beschrieben, eine 2 bis 3/10 mm dicke Kupferschicht galvanisch apikal bzw. okklusal aufgetragen. Diese Schicht wird an ihrer, dem Bad zugewandten Oberfläche anschließend passiviert, worauf eine erneute Schicht aus leitfähigem Material aufgetragen wird und der Galvanisierauftrag fortzusetzen ist. Die 2 bis 3/10 mm dicke Kupferschicht kann anschließend herausgelöst werden, wodurch sich eine entsprechend für das Schruppen geeignete Negativkontur der Kupferelektrode ergibt.

Wie bereits erwähnt, wird vorzugsweise als leitfähiges Material Silber oder Graphit verwendet, das in möglichst dünnen Schichtdicken von 1 bis 5 µm auftragen wird.

Aus Gründen der Materialersparnis und einer kurzen Erodierzeit sollten die Funkenerosionselektroden möglichst klein sein. Andererseits ist es unumgänglich, daß die Kupferhälften der Elektroden bis in einen Bereich hineinreichen, wo die beiden Hälften planflächig aneinanderliegen, in der Regel also eine gemeinsame Ringanlagefläche besteht. Vorzugsweise wird daher diese gemeinsame Ringfläche über einzelne Stege mit der eigentlichen, die Negativkontur des Wachsmodells aufweisenden Kupferelektrode verbunden, was durch Aufbringen entsprechender Silber- oder Graphitschichten geschehen kann.

Zur Ausrichtung der Befestigungsmittel für die Funkenerosionsmaschine und deren Befestigung an den galvanisch hergestellten Kupferelektroden werden diese Kupferelektroden in eine entsprechend geformte Ausnehmung mit einer horizontalen Auflagefläche eines Auflagetisches eingelegt, axial und radial ausgerichtet, bevor ein in einem Auslegerarm eingespannter und ebenfalls radial ausgerichteter Dorn mit einer endseitig befestigten Platte auf die Kupferelektrodenoberfläche abgesenkt und schließlich die Platte mit der Oberfläche verklebt oder verlötet wird. Eine axiale Ausrichtung des Dornes bzw. der endseitig hieran befestigten Platte kann über entsprechend angeordnete Einspannvorrichtungen eines Auslegerarm oberhalb des Tisches durchgeführt werden. Die axiale Ausrichtung der Kupferelektrode ergibt sich zwangsläufig durch die Ausnehmung. Eine radiale Ausrichtung der Kupferelektrode ist durch eine asymmetrische Kontur und eine entsprechend angepaßte Ausnehmung möglich. Alternativ hierzu ist es jedoch auch möglich, die Verbindungsmittel, wie Dorne, Platten, Hülsen oder ähnliches, galvanoplastisch zusammen mit dem Kupferauftrag für die Funkenerosionselektrode als einstückiges Teil in einem einzigen Arbeitsgang herzustellen, so daß ein zusätzlicher Arbeitsgang, wie das Verkleben oder Verlöten, entfällt.

Um stets dieselben Bezugslinien zu erhalten, besteht die Ausnehmung des Tisches aus einer ringförmigen Planfläche und einem Krater in einer Größe, der zur Aufnahme einer Kupferelektrode ausreicht.

Da beim Funkenerodieren aus Stabilitätsgründen etwa nur 0,5 bis 0,7 mm Kupfer der Kupferelektrode gebraucht werden, wird vorzugsweise die Galvanisierung der Kupferelektrode nur solange durchgeführt, bis die Kupferelektroden eine Dicke bis zu 1_mm besitzen.

Zum Einspannen, Einlegen und Ausrichten von Gipsmodellen oder Kupferelektroden für die funkenerosive Herstellung von Zahnersatzteilen wird die in dem Anspruch 15 beschriebene Vorrichtung verwendet. Diese besteht zum einen aus einem in jede gewünschte Neigung einstellbaren Ablagetisch, oberhalb dessen ein an einer vertikalen Säule angelenkter horizontaler Auslegerarm angeordnet ist, der sowohl auf- und abbewegbar als auch um die Säulenlängsachse drehbar oder über einen Teilbereich schwenkbar ist. Diese Säule und der Ablagetisch weisen jeweils mindestens eine Bohrung zur Aufnahme eines Zentrierdornes auf, womit der Auslegerarm in vertikal-axialer Richtung in bezug auf den Ablagetisch justierbar ist. Ferner besitzt der Auslegerarm an seiner Unterseite eine permanentmagnetische oder magnetisch erregbare Aufnahmefläche für eine gelochte Orientierungsplatte aus Metall.

Zur Klemmung eines Gipsmodells besitzt der Ablagetisch an seiner Oberfläche Einspannbacken und/oder eine Ausnehmung mit mindestens einer planen Ringfläche zur Aufnahme einer galvanisch hergestellten Kupferelektrode.

Vorzugsweise ist der von der Ringfläche eingeschlossene Bereich der Ablagetischauflagefläche nach unten hin kraterförmig ausgehöhlt, wodurch es möglich ist, die dem Bad entnommenen zusammengesetzten Elektrodenhälften einzulegen und zunächst an der ersten oberen Elektrode ein Befestigungsmittel nach entsprechender Ausrichtung anzulöten oder aufzukleben, anschließend das Kupferelektrodenpaar um 180° zu drehen und an der zweiten Elektrode eine entsprechende Befestigung anzubringen. Als Befestigungsmittel können beispielsweise Platten verwendet werden, die vorzugsweise am Ende eines Dornes befestigt sind, wobei dieser Dorn in eine Spann- oder Klemmeinrichtung oder ein mit einem Innengewinde versehenen Bohrung des Auslegerarmes aufgenommen werden.

Vorzugsweise besitzt der Ablagetisch abnehmbare austauschbare Oberteile, von denen das eine zur Ausrichtung eines Meistermodells (Gipsmodells) mit einer Einspannvorrichtung und das andere mit einer Ausnehmung zur Aufnahme einer galvanisch hergestellten Kupferelektrode versehen ist.

Ausführungsbeispiele, an denen die Erfindung weiterhin erläutert werden soll, sind in den Zeichnungen dargestellt. Es zeigen
- Fig. 1a, b: jeweils einen Querschnitt durch einen Gipsstumpf mit angeformtem Wachsmodell, worauf verschiedene Überzüge aufgetragen worden sind, in schematischer Darstellung,
- Fig. 2a, b: jeweils einen Querschnitt durch ein Wachsmodell mit galvanisch hergestellter Kupferformelektrode an der apikalen Seite,
- Fig. 3a, b: jeweils einen Querschnitt durch aufeinandergesetzte Kupferformelektroden mit dazwischenliegendem Wachsmodell,
- Fig. 4 und 5: jeweils schematische Darstellungen der erfindungsgemäßen Vorrichtung und

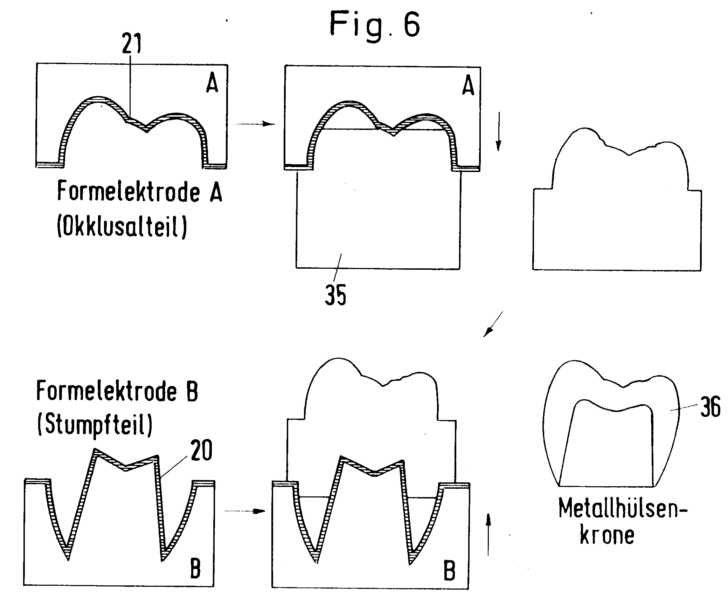

- Fig. 6: eine Darstellung des funkenerosiven Verfahrens zur Herstellung einer Krone.

Das erfindungsgemäße Verfahren vereint drei verschiedene Technologien, die jeweils ohne spezifische Fachkenntnisse durchgeführt werden können. Bei den Technologien handelt es sich um
1. die zahntechnische Bearbeitung - Herstellung eines Wachsmodelles
2. um die Herstellung einer Galvanoplastik und
3. den funkenerosiven Abtrag aus einem Rohling.

Nachteile, wie das Entstehen von Poren, Lunker oder Formveränderungen sind bei Durchführung des folgenden beschriebenen Verfahrens ausgeschlossen.

Bei der Herstellung von Zahnersatzteilen wird von einem Abdrucklöffel ausgegangen, aus dem in nach dem Stand der Technik bekannter Weise ein positives Gipsmodell hergestellt wird. Nach diesem Gipsmodell werden die Gipsstümpfe erstellt - entweder für Kronen oder für Brücken - jeweils mit entsprechend festgelegten Präparationsgrenzen.

Der Gipsstumpf 10 wird gereinigt und imprägniert. Nach dem Eintrocknen des Imprägniermittels wird eine Kunststoffhaube 11 aus Kaltpolymerisat auf Acrylatbasis aufgetragen, die etwa 1/10 mm oberhalb der Präparationsgrenze 12 endet. Diese Kunststoffhaube hat eine Dicke von 0,5 bis etwa 1 mm. Das hergestellte Acrylhäubchen 11 hat den Vorteil, daß bei nachträglichen Arbeitsgängen keine Verformung des Wachsmodelles 13 mehr eintreten kann. Gleichzeitig wird eine Duplizierung der gewünschten Elektrode - zur Herstellung von Schruppelektroden und Schlichtelektroden - erzielt.

Die Modellation mit Wachs ist die Grundlage, um Elektroden zu fertigen. Die Kronen- bzw. Brückenmodelle müssen so modelliert sein, daß die Präparationsgrenze 12 und der Zahnäquator 14 optimal dargestellt sind. Der Gipsstumpf 10 mit der modellierten Wachskrone 13 wird anschließend in das Meistermodell eingesetzt und in einen Modelltisch verschraubt. Alle wichtigen Punkte werden nun - wie nach dem Stand der Technik üblich - mit einem Parallelometer überprüft. Danach muß noch auf dem Wachsmodell 13 eine dünne Silikonauflage 15 oberhalb des Zahnäquators aufgetragen werden, die bezeckt, daß die Wachskrone 13 nach weiteren Arbeitsgängen nicht deformiert und nicht haften bleibt. Anschließend wird der Modelltisch unter ein Justiergerät gestellt, so daß die Achse und die Größe des Rohlings für die Aufnahme in die Funkenerosionsmaschine festgestellt werden können. Oberhalb der Silikonauflage 15 wird ein aushärtbarer Kunststoff 16 aufgetragen, und vor Aushärtung dieses Kunststoffes 16 eine Orientierungsplatte 17 aus Metall hierauf abgesenkt, so daß diese Metallplatte 17 mit dem Kunststoff 16 nach dessen Aushärtung fest verbunden ist. Anschließend wird die Orientierungsplatte 17 mit samt der anhaftenden Schichten 16, 15, 13 und 11 von dem Gipsstumpf 10 abgehoben und von der apikalen Seite her von dem Zahnäquator 14 aus der zuletzt aufgetragene Kunststoff 16 sowie die hieran angrenzenden Flächen der Orientierungsplatte 17 verspachtelt. Die Spachtelmasse ist mit 18 bezeichnet.

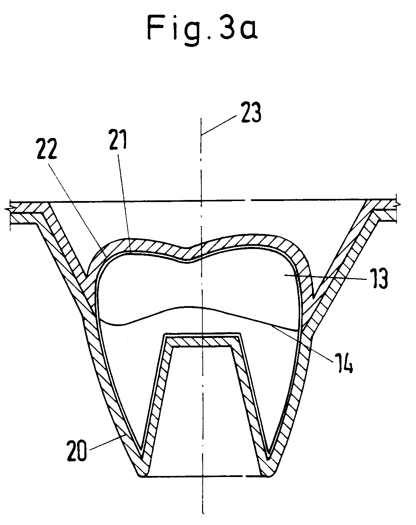

Wie aus Fig. 2a ersichtlich, wird anschließend von der apikalen Seite her die Unterseite der Orientierungsplatte 17, die Spachtelmasse 18, die freigelegte Wachsoberfläche 13 unterhalb des Äquators 14 sowie die Innenseite des Häubchens 11 mit einer Silberschicht 19 überzogen, die als Basis für den Kupferüberzug 20 dient. Hierzu wird die Orientierungsplatte gegebenenfalls zusammen mit weiteren Orientierungsplatten anderer Modelle in eine Einbettmasse eingelegt oder sonstwie an einem Träger befestigt und in ein galvanisches Bad gegeben. Der galvanische Kupferüberzug sollte etwa die Stärke von 1 mm haben. Anschließend wird die Orientierungsplatte mit samt der Schichten 16, 15, 18 abgehoben, so daß man den hergestellten Kupferüberzug 20 mit noch einliegendem Wachsmodell 13 erhält, welches von okklusaler Seite her zugänglich ist. Auf dieses Wachsmodell 13 und die angrenzenden Randbereiche des hergestellten Kupferüberzuges wird nun abermals eine Silber- oder Graphitschicht 21 aufgetragen, die als Basis einer Kupferschicht 22 dient, welche ebenfalls in einem galvanischen Bad hergestellt ist. Hierzu befindet sich der gesamte in Fig. 3a dargestellte Körper in einem galvanischen Bad. Nach Auftrag einer hinreichend dicken Kupferschicht 20 bzw. 21 wird der Körper dem galvanischen Bad entnommen und das Wachsmodell herausgenommen, da es jetzt nicht mehr benötigt wird. Die Innenseiten der Kupferüberzüge 21 und 20 entsprechen der Negativkontur des Wachsmodelles 13. Um die Kupferteile 20, 21 als Funkenerosionselektroden benutzen zu können, muß nun noch ein Befestigungsmittel auf der Außenseite angebracht werden. Dieses Befestigungsmittel kann aus einem anzulötenden Dorn oder einer Platte oder ähnlichem bestehen. Wichtig ist nur, daß das Befestigungsmittel so angebracht wird, daß es sowohl axial als auch radial ausgerichtet ist, d.h. die verwendeten Befestigungsmittel müssen dieselbe Orientierung hinsichtlich der in Fig. 3a dargestellten Längsachse 23 besitzen.

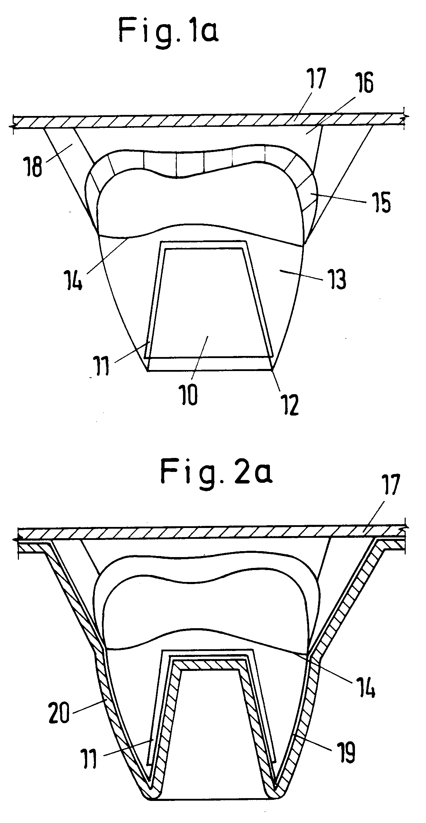

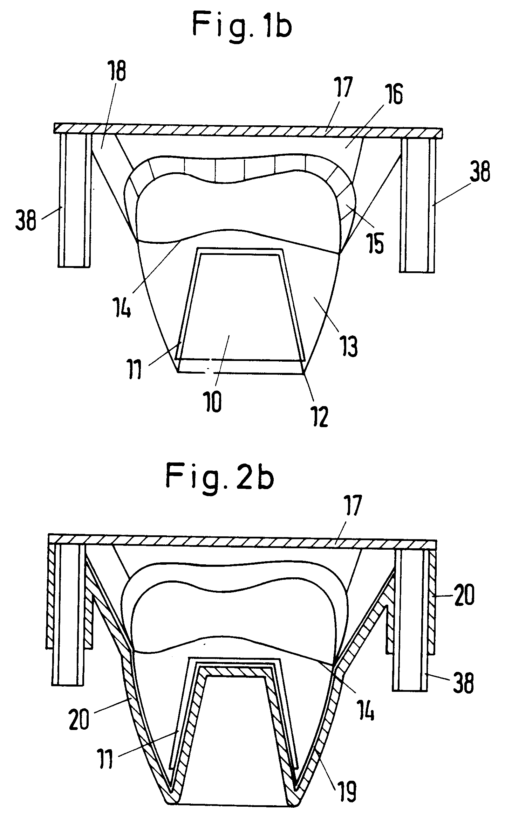

Die in den Fig. 1b, 2b und 3b dargestellten Querschnitte unterscheiden sich von den zuvor beschriebenen dadurch, daß die Verbindungsmittel ebenfalls galvanoplastisch hergestellt werden, und zwar zusammen mit dem als spätere Funkenerosionselektrode dienenden Kupferauftrag als einstückiges Teil.

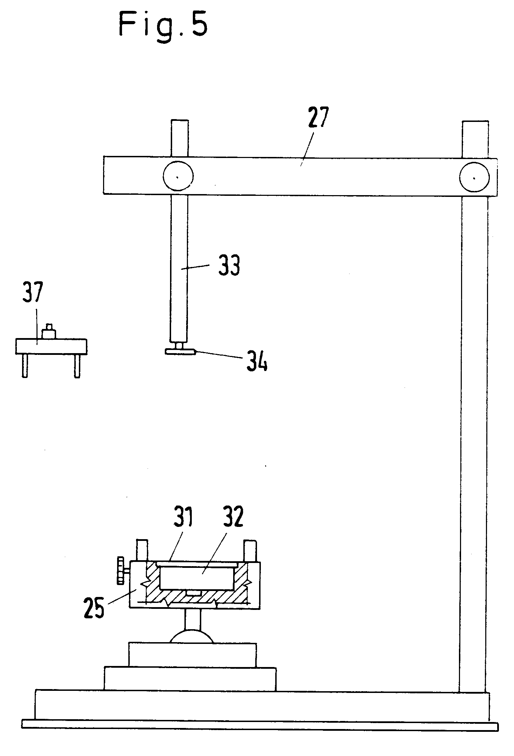

Wie aus Fig. 1b ersichtlich, werden unter Zuhilfenahme der in Fig. 5 angedeuteten Vorrichtung 37 Führungshülsen oder Dornen, z.B. aus Messing (Messingröhrchen 38), am Wachsmodell 13 bzw. den hierauf aufgetragenen Schichten 15, 16 und/oder 18 angewachst.

Wie Fig. 2b verdeutlicht, wird jedoch die Silberschicht 19 bis zu den Messingröhrchen 38 und diese geringfügig überlappend aufgetragen, worauf anschließend ein durchgehender Kupferüberzug 20 galvanisch aufgetragen wird. Nach Abheben der Orientierungsplatte 17 werden vor der Galvanisierung der okklusalen Seite zunächst Stäbe 39 durch die Messingröhrchen 38 zur Ausrichtung geschoben und die Silberschicht 21 an der okklusalen Seite bis in den Bereich der Röhrchen 38 aufgetragen, worauf anschließend die Kupferschicht 22 galvanisiert wird. Um eine Befestigung in der Funkenerosionsanlage zu schaffen, werden vorzugsweise die Enden der Röhrchen, etwa über eine Länge von ca. 5 mm freigelassen, was dadurch bewirkt werden kann, daß diese Enden vor der Verkupferung abgedeckt werden.

Mit der aus den Fig. 1b bis 3b ersichtlichen Fertigungstechnik können die Verbindungsmittel in einem einzigen Arbeitsgang zusammen mit den Kupferüberzügen galvanoplastisch hergestellt werden, so daß das Ankleben oder Anlöten an die Kupferelektrode entfällt.

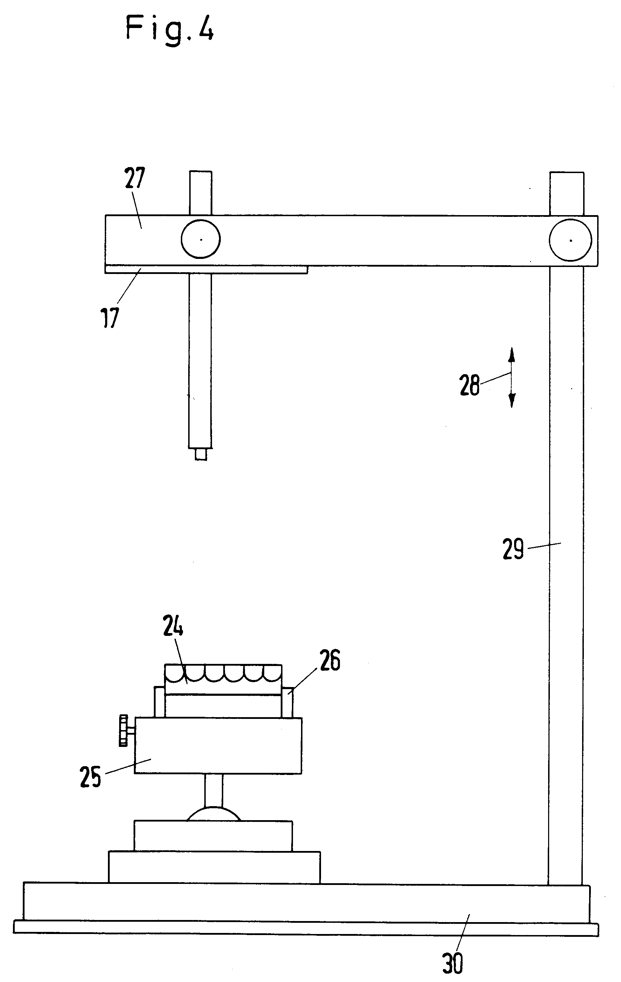

Eine Vorrichtung zum Einspannen eines Meistermodelles 24 und dessen Ausrichtung ist in Fig. 4 dargestellt. Diese Vorrichtung besteht im wesentlichen aus einem Ablagetisch 25, der in die gewünschten Raumrichtungen schwenkbar ist und der beispielsweise Klemmbacken 26 zum Einspannen des Gipsmodells 24 aufweist.

Oberhalb dieses Tisches ist ein Auslegerarm 27 angeordnet, der in Richtung des Doppelpfeils 28 auf- und abbewegbar ist. Dieser Auslegerarm 27 besitzt ebenso wie der Tisch 25 eine nicht dargestellte Bohrung in vertikaler Richtung, über die der Auslegerarm und der Tisch in axialer Richtung mittels eines Zentrierstiftes ausgerichtet werden können. Darüber hinaus ist die Unterseite des Auslegerarms 27 magnetisch und daher geeignet, eine Orientierungsplatte 17 zu halten. Der Auslegerarm 27 ist entweder fest an einer um ihre vertikale Achse drehbaren Vertikalsäule 29 befestigt oder um diese Vertikalachse 29 drehbar. Der Auflagetisch 25 kann entweder fest mit einer Grundfläche 30 verbunden sein oder hierauf lose aufliegen.

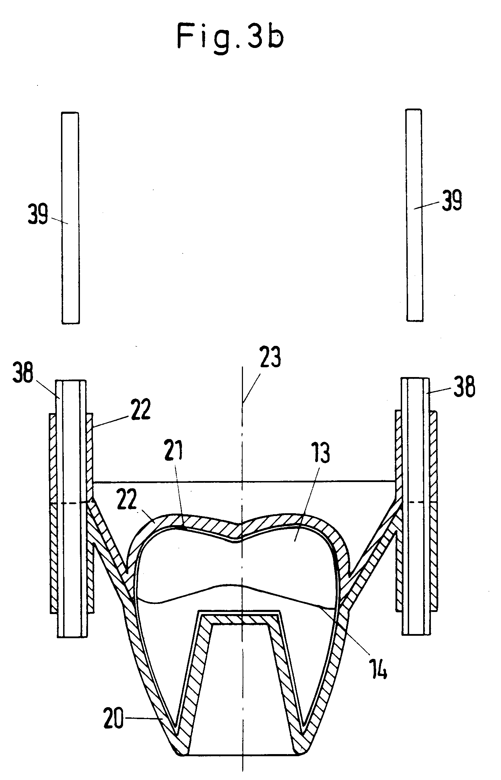

Die in Fig. 5 dargestellte Vorrichtung ist prinzipiell ebenso aufgebaut, wobei der Auflagetisch 25 eine ringförmige Ausnehmung 31 besitzt, die einen Krater 32 umrandet. In diese Ausnehmung 31, 32 kann der in Fig. 3 dargestellte Körper zur Ausrichtung und Anbringung eines Befestigungsmittels eingelegt werden. Dienen als Befestigungsmittel ein Dorn mit einer endseitig befestigten Platten, so ist dieser Dorn 33 in einer geeigneten Klemm- oder Einspannvorrichtung des Auslegerarms 27 befestigt. Durch Herabbewegen des Auslegerarms 27 kommt schließlich die endseitige Platte 34 an die Oberfläche des eingelegten Kupferteils und kann mit diesem verlötet oder mit einem leitenden Kunststoff verbunden werden. Durch Wenden, des Kupfer-Doppelteils um 180° kann an der anderen Seite ebenfalls eine Befestigungsvorrichtung angebracht werden. Hierdurch wird gewährleistet, daß beide Befestigungsvorrichtungen im Hinblick auf die Achse 23 (siehe Fig. 3) und auch hierzu in radialer Richtung ausgerichtet sind, insbesondere empfiehlt es sich, den Dorn 33 mit einem nichtrotationssymmetrischen Querschnitt zu versehen. Zur Herstellung einer Krone aus Metall wird von einem Rohling 35 ausgegangen, auf den die Kupferelektrode 21 herabgefahren wird, bis die Negativkontur durch fortwährenden Abtrag erreicht ist. Anschließend wird von der anderen Seite die gegenüberliegende Elektrode herangefahren und der Rohling 35 so lange bearbeitet, bis die fertige Hülse 36 entstanden ist. Funkenerosives Abtragen ist im Prinzip bekannt und wird beispielsweise in der DE 35 44 123 erläutert, worauf hiermit Bezug genommen wird.

## Patentansprüche

1. Verfahren zur Herstellung von Zahnersatzteilen, wie Kronen oder Brücken, wobei in einem positiven Gipsmodell (10) ein Wachsmodell (13) des Zahnersatzteils gefertigt, dieses Wachsmodell (13) okklusalseitig bis auf Höhe des Zahnäquators (14) mit Silikonkautschuk (15) eingebettetund anschließend apikal das herausgenommene Wachsmodell (13) sowie die hieran angrenzende Silikonkautschukrandfläche mit einem elektrisch leitenden Material (19) bestrichen und hierauf galvanisch ein Kupferüberzug (20) aufgetragen wird, daraufhin der Silikonkautschuk auf der Okklusalseite entfernt und das Wachsmodell (13) sowie dei hieran angrenzende Randfläche mit einem elektrisch leitenden Material (21) bestrichen werden, worauf ebenfalls ein Kupferüberzug (21) galvanisch aufgetragen wird, und schließlich die Kupferüberzüge (20, 22) voneinander und vom Wachsmodell (13) getrennt und als jeweilige Funkenerosionselektroden zur Ausformung eines dem Wachsmodell entsprechenden Zahnersatzteiles aus dem Erodiergut dienen,
**dadurch gekennzeichnet**, daß
auf den entfetteten, imprägnierten Stumpf (10) des positiven Gipsmodelles eine gleitfähige, stabile, möglichst inelastische, dünnwandige Kunststoffhaube (11) aufgetragen wird, die kurz vor der Präparationsgrenze (12) endet und über der anschließend das Wachsmodell (13) unter Ausformung einer Präparationsgrenze (12) und gleichzeitiger Festlegung des Zahnäquators (14) geformt wird, bevor hierauf eine bis zum Zahnäquator (14) reichende Silikon-schicht (15) okklusal aufgetragen wird, währenddessen das Gipsmodell (10) als Meistermodell mit eingesetztem Wachsteil in eine Justiervorrichtung eingespannt ist, daß ferner auf die Silikonschicht ein aushärtbarer Kunststoff (16) aufgetragen wird, auf den eine horizontal ausgerichtete im Umfang größere Orientierungsplatte (17) abgesenkt wird, so daß diese Orientierungsplatte (17) nach Aushärtung des Kunststoffes (16) mit dem Kunststoff (16) verbunden ist, daß diese Orientierungsplatte (17) mitsamt dem anhaftenden Kunststoff (16), der Silikonschicht (15), dem Wachsmodell (13) und der Kunststoffhaube (11) von dem Gipsstumpf (10) angehoben wird und von der apikalen Seite her von dem Zahnäquator (14) aus der zuletzt aufgetragene Kunststoff (16) sowie die hieran angrenzende Fläche der Orientierungsplatte (17) verspachtelt werden und auf die apikale Seite der (ersten) Kunststoffhaube (11), der freiliegenden Wachsmodellfläche (13) und angrenzenden Bereiche bis zur Orientierungsplatte (17) das elektrisch leitfähige Material (19) und darauf auf galvanischem Weg ein Kupferüberzug (20) aufgetragen werden, daß der Kupferauftrag (20) zusammen mit dem Wachsmodell (13) herausgelöst und von der okklusalen Seite her bis zum Zahnäquator (14) ebenfalls zunächst ein leitfähiges Material (21) und darauf auf galvanischem Weg ein Kupferüberzug (22) aufgetragen werden und daß auf beiden Seiten des Kupferüberzuges (22) an den Außenflächen jeweils ein Verbindungsmittel, wie ein Plättchen, ein Dorn oder eine Hülse angebracht wird, wobei diese zueinander in axialer und radialer Richtung ausgerichtet sind

2. Verfahren nach Anspruch 1, dadurch gekennzeichnet, daß als Kunststoffhaube ein Kaltpolymerisat auf Acrylbasis auf den Gipsmodellstumpf aufgetragen wird.

3. Verfahren nach Anspruch 1 oder 2, dadurch gekennzeichnet, daß die Kunststoffhaube ca. 1/10 mm oberhalb der Präparationsgrenze endet.

4. Verfahren nach einem der Ansprüche 1 bis 3, dadurch gekennzeichnet, daß eine Orientierungsplatte aus Metall mit vorzugsweise mindestens zwei Bohrungen auf den ausgehärteten Kunststoff abgesenkt wird.

5. Verfahren nach Anspruch 4, dadurch gekennzeichnet, daß die Orientierungsplatte mittels eines Magneten an einem horizontalen Auslegerarm der Justiervorrichtung während des Absenkens auf den Kunststoff und des Abziehens vom Meistermodell gehalten wird.

6. Verfahren nach einem der Ansprüche 1 bis 5, dadurch gekennzeichnet, daß zunächst eine 2 bis 3110 mm dicke Kupferschicht galvanische aufgetragen, diese Schicht an ihrer Oberfläche passiviert wird, eine erneute Schicht aus leitfähigem Material aufgetragen und der Galvanisierauftrag zur Herstellung von Schruppelektroden fortgesetzt wird.

7. Verfahren nach einem der Ansprüche 1 bis 6, dadurch gekennzeichnet, daß als leitfähiges Material Silber oder Graphit, vorzugsweise in einer Schichtdicke von 1 bis 5 µm aufgetragen wird.

8. Verfahren nach einem der Ansprüche 1 bis 7, dadurch gekennzeichnet, daß die Schicht aus leitfähigem Material und der Galvanikkupferüberzug nur im das Wachsmodell und deren Beschichtung betreffenden Bereich vollflächig und hiervon ausgehend mehrere zu einem Ring führende Stege und der Ring jeweils als Teilfläche aufgetragen werden.

9. Verfahren nach einem der Ansprüche 1 bis 8, dadurch gekennzeichnet, daß die Verbindungsmittel aus einem Dorn und einer endseitigen kleinen, vom Dorn lösbaren Platte oder Hülse bestehen, die auf Kupferoberfläche aufgelötet, aufgeklebt oder galvanisch zusammen mit dem Kupferauftrag als einstückiges Teil galvanisiert werden.

10. Verfahren nach Anspruch 9, dadurch gekennzeichnet, daß die Kupferelektroden zur Befestigung der Dorne in eine entsprechend geformte Ausnehmung mit horizontaler Auflagefläche eines Tisches eingelegt, axial und radial ausgerichtet werden, bevor ein in einem Auslegerarm eingespannter und ebenfalls radial ausgerichteter Dorn mit einer endseitig befestigten Platte auf die Kupferelektrodenoberfläche abgesenkt und schließlich die Platte mit der Oberfläche vorzugsweise mittels eines leitfähigen Kunst stoffs verklebt oder verlötet wird.

11. Verfahren nach Anspruch 9, dadurch gekennzeichnet, daß vor dem Galvanisieren der Kupferüberzüge am Wachsmodell Träger für die galvanisch zu fertigenden Verbindungsmittel am Wachsmodell nach vorheriger axialer und radialer Ausrichtung hierzu angewachst und mit einer Schicht aus leitfähigem Material derart leitend verbunden werden, daß die als spätere Funkenerosionselektroden dienenden Kupferüberzüge und die Verbindungsmittel einstückig sind.

12. Verfahren nach einem der Ansprüche 9 oder 11, dadurch gekennzeichnet, daß die Träger für die galvanisch zu fertigenden Verbindungsmittel Hülsen sind, deren Enden, vorzugsweise über eine Länge von ca. 5 mm, vor dem Auftrag des Kupfers abgedeckt werden.

13. Verfahren nach einem der Ansprüche 10 bis 12, dadurch gekennzeichnet, daß die Kupferelektrode in einen von einer ringförmigen Planfläche begrenzten Krater als Ausnehmung eingelegt wird.

14. Verfahren nach einem der Ansprüche 1 bis 13, dadurch gekennzeichnet, daß die Galvanisierung so lange durchgeführt wird, bis die Kupferelektrode eine Mindestdicke von 1 mm aufweist.

15. Vorrichtung zum Einspannen, Einlegen und Ausrichten von Gipsmodellen oder Kupferelektroden für die funkenerosive Herstellung von Zahnersatzteilen nach einem der Ansprüche 1 bis 14, bestehend aus einem in jede gewünschte Neigung einstellbaren Ablagetisch, dadurch gekennzeichnet, daß oberhalb des Ablagetisches ein an einer vertikalen Säule angelenkter horizontaler Auslegerarm angeordnet ist, der sowohl auf- und abbewegbar als auch um die Säulenlängsachse drehbar oder über einen Teilbereich schwenkbar ist, daß diese Säule und der Anlagetisch jeweils mindestens eine Bohrung zur Aufnahme eines Zentrierdornes aufweisen, womit der Auslegerarm in vertikal-axialer Richtung in bezug auf den Ablagetisch festlegbar ist und daß die Auslegearmunterseite eine permanentmagnetische oder magnetisch erregbare Aufnahmefläche für eine gelochte Orientierungsplatte aus Metall aufweist.

16. Vorrichtung nach Anspruch 15, dadurch gekennzeichnet, daß die Ablagetischauflagefläche Einspannbacken zur Klemmung eines Gipsmodells und/oder eine Ausnehmung mit mindestens einer planen Ringfläche zur Aufnahme einer galvanisch hergestellten Kupferelektrode aufweist.

17. Vorrichtung nach Anspruch 16, dadurch gekennzeichnet, daß der von der Ringfläche eingeschlossene Bereich nach unten hin kraterförmig ausgehöhlt ist.

18. Vorrichtung nach einem der Ansprüche 15 bis 17, dadurch gekennzeichnet, daß der Auslegerarm zur Halterung eines Dornes eine Spann- oder Klemmeinrichtung oder eine mit einem Innengewinde versehene Bohrung aufweist.

19. Vorrichtung nach einem der Ansprüche 15 bis 18, dadurch gekennzeichnet, daß der Ablagetisch abnehmbare, austauschbare Oberteile besitzt, von denen das eine zur Ausrichtung eines Meistermodells mit einer Einspannvorrichtung das andere mit einer Ausnehmung zur Aufnahme einer galvanisch hergestellten Kupferelektrode versehen ist.

## Claims

1. A method of making tooth replacement parts such as crowns or bridges, whereby a wax model (13) of the tooth replacement part is made in a positive plaster modes (10), this wax model (13) is covered with a silicone rubber (15) occlusally up to the level of the tooth equator (14) and is subsequently apically of the removed wax model (13) as well as the bordering silicone-rubber peripheral surfaces are covered with an electrically conductive material (19) and on top of this a copper layer (20) is galvanically plated, whereupon the silicon rubber is removed from the occlusal side and the wax model (13) and the surrounding edges are coated with an electrically conductive material (21) whereupon a copper coating (21 ) is galvanically applied and subsequently the copper layers (20, 22) are separated from each other and from the wax model (13) and are used as spark-erosive electrodes for forming a tooth replacement part corresponding to the wax model from an erodible material, characterized in that
on a degreased sealed stump (10) of the positive plaster model a thin-walled, stable, slippery, and relatively inelastic synthetic-resin cap (11) is mounted which stops on the occlusal side shortly before the preparation border (12) and over which is subsequently formed the wax model (13) by shaping a preparation border (12) and simultaneous establishment of the tooth equator (14), before a silicone layer (15) extending to the tooth equator (14) is mounted occlusally on it, while meanwhile the plaster model (13) is set as a master model with the inset wax parts in an adjustment device, that in addition on the silicone layer a hardenable plastic (16) is layered on which a horizontally extending and overreaching orientation plate (17) is set so that this orientation plate (17) is fixed after hardening of the plastic (16) with the plastic (16), that this orientation plate (17) together with the affixed plastic (16), the silicone layer (15), the wax model (13), and the plastic cap (11) is lifted from the plaster stump (10) and a filler is applied from the apical side from the tooth equator (14) to the last applied plastic (16) as well as to the adjacent surfaces of the orientation plate (17) and the apical sides of the (first) plaster cup (11), the exposed wax-model surfaces (13) and adjacent areas right up to the orientation plate (17) are coated with an electrically conductive material (19) and thereover for galvanic purposes with a copper layer (20), that the copper layer (20) together with the wax model (13) are separated and from the occlusal side right up to the tooth equator (14) first a conductive material (21) and then for galvanic purposes a copper layer (22) is applied and that on both sides of the copper layer (22) on the outer surfaces a connecting element such as a plate, a pin, or a sleeve is mounted such that they can be aligned radially and axially relative to each other.

2. The method according to claim 1, characterized in that a cold acrylate-based polymer is applied to the plaster-model stump as plastic cap.

3. The method according to claim 1 or 2, characterized in that the plastic cap stops about 1/10mm above the preparation border.

4. The method according to one of claims 1 to 3, characterized in that an orientation plate of metal preferably formed with two bores is set on the hardened plastic.

5. The method according to claim 4, characterized in that the orientation plate is held by means of a magnet on a horizontal outrigger arm of the adjustment mechanism during setting of it on the plastic and pulling it from the master model.

6. The method according to one of claims 1 to 5, characterized in that a 2 to 3/10mm thick copper layer is galvanically applied, this layer is passivated on its surface, a new layer of conductive material is applied, and the galvanic coating for forming the rough electrode is started.

7. The method according to one of claims 1 to 6, characterized in that the conductive material is silver or graphite, preferably in a thickness of 1 to 5 µm.

8. The method according to one of claims 1 to 7, characterized in that the layer of conductive material and the galvanic copper layer is only applied to all surfaces of the wax model and the regions of its coatings and thereafter is applied to several elements leading to a ring and to partial surfaces of the ring.

9. The method according to one of claims 1 to 8, characterized in that the connecting element is formed by a pin and a small plate or sleeve which are separable from the end of the plate and which are soldered, glued or galvanically united with the copper layer as a single galvanic piece.

10. The method according to claim 9, characterized in that the copper electrodes for mounting the pins are set in a correspondingly shaped recess of a table with a horizontal support surface, are axially and radially aligned before a radially aligned fitted in an outrigger arm and carrying on its end a fixed plate is set down on the copper electrode surface, and subsequently the plate is soldered to the surface or glued thereto preferably by a conductive plastic.

11. The method according to claim 9, characterized in that, before galvanic application of the copper layers on the wax model, supports are formed on the wax model for the subsequently galvanically produced connecting elements after previous axial and radial alignment and are covered with a layer of conductive material to make them conductive so that the subsequently applied copper layer for spark-erosion electrodes are unitary with the connecting elements.

12. The method according to claim 9 or 11, characterized in that the supports for the subsequently galvanically produced connecting element are sleeves whose end are covered preferably over a length of about 5mm before the application of the copper.

13. The method according to one of claims 10 to 12, characterized in that the copper electrode is laid in a recess serving as holder of an annular flat surface.

14. The method according to one of claims 1 to 13, characterized in that the galvanic coating is carried out such that the copper electrodes have a minimal thickness of 1mm.

15. An apparatus for holding, setting, and aligning of plaster models or copper electrodes for the spark-erosive production of tooth parts according to one of claims 1 to 14, comprising a holding table orientable in any desired inclination, characterized in that above the holding table an outrigger arm that is coupled on a vertical column is arranged that is movable up and down and also pivotally of the column axis or over a range such that this column and the support table each have at least one bore for holding a centering pin whereby the outrigger arm is fixable in the vertical/axial direction relative to the support table, and that the underside of the outrigger arm has a permanent magnet or magnetically excitable holding surface for an apertured orientation plate of metal.

16. The apparatus according to claim 15, characterized in that the support surface of the support table has holding jaws for clamping a plaster model and/or a recess with at least one planar annular surface for receiving a galvanically produced copper electrode.

17. The apparatus according to claim 16, characterized in that the regions surrounding the annular surfaces are hollowed out like a downwardly open recess.

18. The apparatus according to one of claims 15 through 17, characterized in that the outrigger arm has for holding a pin a tightening or clamping device or an internally threaded bore.

19. The apparatus according to one of claims 15 to 18, characterized in that the support table has removable and exchangeable upper parts of which one is provided for holding a master model and the other is provided with a recess for holding a galvanically produced copper electrode.

## Revendications

1. Procédé de fabrication de pièces de prothèses dentaires, comme des couronnes ou des bridges, en réalisant, dans un modèle positif en plâtre (10), un modèle en cire (13) de la pièce de prothèse dentaire, en englobant ce modèle en cire (13), côté occlusal, jusqu'à hauteur de l'équateur (14) de la dent, dans du caoutchouc au silicone (15), et en enduisant ensuite, côté apical, le modèle en cire (13), après son démontage, ainsi que la surface de caoutchouc au silicone voisine avec une matière (19) conductrice de l'électricité, puis ensuite en déposant par galvanoplastie un revêtement de cuivre (20), et, là-dessus, en enlevant le caoutchouc au silicone du côté occlusal et en enduisant le modèle en cire (13), ainsi que la surface de bordure voisine, avec un matériau (21) conducteur de l'électricité, sur quoi, de même, on dépose, par galvanoplastie, un revêtement de cuivre (22), et enfin en séparant les revêtements de cuivre (20, 22) l'un de l'autre et du modèle en cire (13), et en les utilisant chacun comme électrodes d'étincelage pour former, à partir du produit à éroder, une pièce de prothèse dentaire correspondant au modèle en cire,
caractérisé en ce que
l'on dépose sur le moignon (10), dégraissé et imprégné, du modèle positif en plâtre une coquille de matière plastique (11) à paroi fine, rigide, la moins élastique possible, à surface glissante, qui se termine un peu en avant de la limite de préparation (12), et au-dessus de laquelle le modèle en cire (13) est ensuite moulé, avec formage d'une limite de préparation (12) et détermination simultanée de l'équateur (14) de la dent, avant de déposer ensuite, du côté occlusal, une couche de silicone (15) allant jusqu'à l'équateur (14) de la dent, tandis que le modèle en plâtre (10) est mis en serrage dans un dispositif d'ajustage, comme maître-modèle avec la partie en cire incorporée, en ce que, de plus, sur la couche de silicone, est déposée une matière plastique durcissable (16), sur laquelle on abaisse une plaque d'orientation (17), de périphérie plus grande et dirigée horizontalement, de telle façon que cette plaque d'orientation (17), après durcissement de la matière plastique (16), soit liée à la matière plastique (16), en ce que cette plaque d'orientation (17), en même temps que la matière plastique adhérente (16), la couche de silicone (15), le modèle en cire (13) et la coquille de matière plastique (11), est soulevée du moignon de plâtre (10) et, en partant du côté apical, à partir de l'équateur (14) de la dent, la matière plastique (16) déposée en dernier, ainsi que la surface voisine de la plaque d'orientation (17), sont mastiquées et, sur le côté apical de la (première) coquille de matière plastique (11), de la surface libre du modèle en cire et des zones voisines, jusqu'à la plaque d'orientation (17), la matière (19) conductrice de l'électricité et, par dessus, par voie galvanique, un revêtement de cuivre (20) sont déposés, en ce que le dépôt de cuivre (20) est enlevé en même temps que le modèle en cire (13) et, depuis le côté occlusal, jusqu'à l'équateur (14) de la dent, un matériau (21) conducteur de l'électricité est, de même, d'abord appliqué et, par dessus, par voie galvanique, un revêtement de cuivre (22) est appliqué et en ce que, sur les deux faces du revêtement de cuivre (22), sur chacune des surfaces extérieures, est mis en place un moyen de raccordement, comme une plaquette, une broche ou un manchon, ceux-ci étant orientés les uns par rapport aux autres suivant la direction axiale et la direction radiale.

2. Procédé suivant la revendication 1, caractérisé en ce que l'on dépose sur le moignon du modèle en plâtre un produit de polymérisation à froid à base acrylique.

3. Procédé suivant la revendication 1 ou la revendication 2, caractérisé en ce que la coquille de matière plastique se termine environ 1/10 mm au-dessus de la limite de préparation.

4. Procédé suivant l'une quelconque des revendications 1 à 3, caractérisé en ce qu'une plaque d'orientation en métal, comportant, de préférence, au moins deux alésages, est abaissée sur la matière plastique durcie.

5. Procédé suivant la revendication 4, caractérisé en ce que la plaque d'orientation est maintenue au moyen d'un aimant sur un bras support horizontal du dispositif d'ajustage pendant sa descente sur la matière plastique et pendant l'enlèvement du maître-modèle.

6. Procédé suivant l'une quelconque des revendications 1 à 5, caractérisé en ce qu'une couche de cuivre, d'une épaisseur de 2 à 3/10 mm, est d'abord déposée par galvanoplastie, que cette couche est rendue passive sur sa surface externe, qu'une nouvelle couche en matière conductrice de l'électricité est appliquée et qu'on poursuit l'application par galvanoplastie pour la réalisation d'électrodes d'ébauchage.

7. Procédé suivant l'une quelconque des revendications 1 à 6, caractérisé en ce que, comme matière conductrice de l'électricité, on applique de l'argent ou du graphite, de préférence sur une épaisseur de couche de 1 à 5 micromètres.

8. Procédé suivant l'une quelconque des revendications 1 à 7, caractérisé en ce que la couche de matière conductrice et le revêtement de cuivre par galvanoplastie sont appliqués, sur toute la surface, seulement dans la zone concernée par le modèle en cire et son revêtement, et, à partir de là, plusieurs barrettes conduisant à un anneau et l'anneau sont déposés sous la forme, chaque fois, de surfaces partielles.

9. Procédé suivant l'une quelconque des revendications 1 à 8, caractérisé en ce que les moyens de raccordement sont constitués d'une broche et d'un manchon ou d'une plaque petite située à son extrémité et démontable de la broche, qui est soudée, collée sur la surface externe de cuivre ou assemblée par galvanoplastie avec le revêtement de cuivre, en formant une pièce monobloc.

10. Procédé suivant la revendication 9, caractérisé en ce que les électrodes de cuivre pour la fixation des broches sont introduites dans un évidement, de forme adaptée et comportant une surface d'appui horizontale, d'une table, et sont orientées axialement et radialement avant qu'une broche mise en serrage dans un bras support et, de même, orientée axialement, comportant une plaque fixée à son extrémité, soit abaissée sur la surface des électrodes de cuivre, et que finalement, la plaque soit collée avec cette surface externe, de préférence au moyen d'une matière plastique conductrice de l'électricité, ou soit soudée avec cette surface.

11. Procédé suivant la revendication 9, caractérisé en ce qu'avant l'application du revêtement de cuivre par galvanoplastie sur le modèle en cire, des supports pour les moyens de raccordement à réaliser par galvanoplastie sont, pour cela, fixés sur le modèle en cire suivant la direction axiale et radiale précédente, et sont reliés à une couche en matériau conducteur, de telle façon que les revêtements de cuivre servant ensuite d'électrodes d'étincelage et les moyens de raccordement forment une seule pièce.

12. Procédé suivant la revendication 9 ou la revendication 11, caractérisé en ce que les supports pour les moyens de raccordement à réaliser par galvanoplastie sont des manchons, dont les extrémités sont recouvertes, de préférence sur une longueur d'environ 5 mm, avant que le cuivre soit déposé.

13. Procédé suivant l'une quelconque des revendications 10 à 12, caractérisé en ce que l'électrode de cuivre est placée dans un cratère formant évidement, délimité par une surface plane annulaire.

14. Procédé suivant l'une quelconque des revendications 1 à 13, caractérisé en ce que la galvanisation est poursuivie jusqu 'à ce que l'électrode de cuivre présente une épaisseur minimale de 1mm.

15. Dispositif pour la fixation, l'implantation et l'orientation de modèles en plâtre ou d'électrodes en cuivre pour la fabrication de pièces de prothèses dentaires par étincelage, suivant l'une quelconque des revendications 1 à 14, comportant une table support réglable avec toutes les inclinaisons souhaitées, caractérisé en ce qu'au dessus de la table support, un bras horizontal articulé est disposé sur une colonne verticale, bras qui peut aussi bien se déplacer vers le haut et vers le bas que pivoter en rotation autour de la colonne verticale, ou pivoter sur une zone partielle, en ce que cette colonne et la table support présentent chacune au moins un alésage pour recevoir une broche de centrage avec laquelle on peut fixer le bras en direction axiale verticale par rapport à la table support, et en ce que la face inférieure du bras présente une surface de réception, que l'on peut activer par aimantation ou par aimant permanent, pour une plaque d'orientation munie de trous.

16. Dispositif suivant la revendication 15, caractérisé en ce que la surface de réception de la table support présente des mâchoires de serrage pour bloquer un modèle en plâtre et/ou un évidement comportant au moins une surface annulaire plane pour recevoir une électrode de cuivre fabriquée par galvanoplastie.

17. Dispositif suivant la revendication 16, caractérisé en ce que la zone délimitée par la surface annulaire est creusée vers le bas en forme de cratère.

18. Dispositif suivant l'une quelconque des revendications 15 à 17, caractérisé en ce que, pour maintenir une broche, le bras présente un dispositif de serrage ou de blocage, ou un alésage comportant un filetage intérieur.

19. Dispositif suivant l'une quelconque des revendications 15 à 18, caractérisé en ce que la table support possède des superstructures démontables et interchangeables, dont l'une est équipée d'un dispositif de serrage pour orienter un maître modèle, et l'autre est munie d'un évidement pour recevoir une électrode de cuivre réalisée par galvanoplastie.
